Europäisches Patentamt

(19) European Patent Office

Office européen des brevets

(11) Publication number: 0 147 999

A2

(12) # EUROPEAN PATENT APPLICATION

(21) Application number: 84308893.1

(22) Date of filing: 19.12.84

(51) Int. Cl.⁴: **D 06 F 37/20**
**F 16 F 9/36**

(30) Priority: 23.12.83 ES 278545

(43) Date of publication of application:
10.07.85 Bulletin 85/28

(84) Designated Contracting States:
DE FR GB IT SE

(71) Applicant: I.T.W. Espana, S.A.
Carretera de Ribas Km. 31.7
Las Franquesas del Valles Barcelona(ES)

(72) Inventor: Fernandez, Francisco Sala
c./ Rosello 13
Granollers, Barcelona(ES)

(74) Representative: Gordon, Michael Vincent
GILL JENNINGS & EVERY 53-64 Chancery Lane
London WC2A 1HN(GB)

(54) Shock absorber for a washing machine.

(57) A shock absorber for a washing machine includes a cylinder (1), a plunger (2) carried by a shank (3) forming a double chamber within the cylinder (1), and the double chamber being sealed at the outlet of the shank with the aid of a two-lip gasket (7), characterised in that the gasket (7) is linked in an immovable manner to the cylinder inlet so that, apart from sealing the shank at its outlet, it ensures that from a stable situation corresponding to when the shank is inserted to a maximum inside the cylinder, and as the shank emerges and the effective volumetric capacity of the double chamber increases, a gradual depression or vacuum is created acting as recovery means urging the shank to return to the stable situation.

FIG.-1

EP 0 147 999 A2

0147999

I.T.W. ESPANA, S.A.                    21/2248/02

## SHOCK ABSORBER FOR A WASHING MACHINE

This invention refers to a shock absorber for a washing machine which has been specially designed and improved to simplify its structural features whilst maintaining its operative efficiency.

More specifically, the shock absorber which this invention proposes can be of the type disclosed in our Spanish Utility Model 271 728 namely a gradual double-effect shock absorber for a washing machine.

In the shock absorber of said Utility Model, communication between two chambers made in a cylinder by a plunger was through a peripheral passage between the plunger and the cylinder, whereby a slightly tapered configuration for the cylinder established a gradual nature of the dampening effect.

At the same time as the plunger shifts inside the tapered cylinder, the peripheral passage made between these elements gradually becomes narrower, as the diameter of said cylinder is reduced.

This basic construction was completed with a two-lip floating gasket, designed to seal the cylinder inlet and which, due to its floating nature, apart from preventing leakage of the fluid, absorbed the volumetric variation caused by the plunger displacement, specifically caused by the shank linked to the said plunger entering and leaving the cylinder. In this shock absorber, a return spring was also foreseen, establishing a stable limit situation between the cylinder and the shank, from which the relative displacements took place between these elements, to absorb the vibrations and displacements of the washing machine drum.

In accordance with this invention, a shock absorber for a washing machine includes a cylinder, a plunger carried by a shank forming a double chamber within the cylinder and the double chamber being sealed at the outlet of the shank with the aid of a two-lip gasket, characterised in that the gasket is linked in an immovable manner to the cylinder inlet so that, apart from sealing the shank at its outlet, it ensures that from a stable situation corresponding to when the shank is inserted to a maximum inside the cylinder, and as the shank emerges and the effective volumetric capacity of the double chamber increases, a gradual depression or vacuum is created acting as recovery means urging the shank to return to the stable situation.

This apparently insignificant contruction detail, namely preventing axial displacement of the gasket, gives the shock absorber substantially different functional characteristics, which lead to advantages of an economic nature, particularly the possibility of dispensing with the return spring.

Indeed, if the fluid is loaded in the cylinder from the situation of maximum penetration of the shank inside it, as the plunger shifts and the shank emerges from the cylinder the real volumetric capacity of the cylinder gradually increases. However, since the two-lip gasket is immobilized, it cannot act as a compensating element of the said volumetric variation, as occurred in our Spanish Utility Model 272 728. Instead, a gradual depression or vacuum is created in the cylinder, which reaches its maximum in the situation of minimum penetration of the shank. This depression or vacuum leads to the plunger tending to occupy the original position, i.e. that of maximum penetration of the shank, in which the said depression or vacuum disappears. This achieves the same recovery effect as with the spring in the previous shock absorber, but without needing the said spring or any other auxiliary element for the shock absorber.

From the foregoing, it can be deduced that in the shock absorber which this invention proposes, not only is an economic reduction achieved, coinciding with the value of the said spring and that equivalent to the assembly operation, but in addition, a recovery effect is achieved through a simple depression or vacuum, whereby the working life of the shock absorber is considerably lengthened, because there are no mechanical recovery elements which could deteriorate.

A shock absorber, in accordance with the present invention, will now be described, by way of example only, with reference to the accompanying drawings, in which:-

Figure 1 shows a diametrical cross-section of the shock absorber in the situation of maximum shank penetration; and

Figure 2 shows a diametrical cross-section of the shock absorber in a situation of comparatively less shank penetration than in Figure 1.

The shock absorber which this invention proposes is made up, as is conventional, of a cylinder 1 inside which a plunger 2 moves, linked to a telescopically displaceable shank 3 which emerges from the cylinder 1 through a lid 4.

This cylinder 1, as in our Spanish Utility Model 272 728, adopts a slightly convergent inner configuration towards its opposite end to the shank outlet, defining, with respect to the plunger 2, a peripheral passage 5, for the fluid 6, which intercommunicates the two chambers made on both sides of the plunger 2.

The passage 5 gradually becomes narrower as the plunger 2 is inserted in the cylinder 1.

The invention is centred on the fact that a two-lip gasket 7, which seals the inlet of the shell or cylinder 1 at the closing lid 4, is perfectly fixed to said shell or cylinder 1 making axial displacement of the gasket 7 impossible.

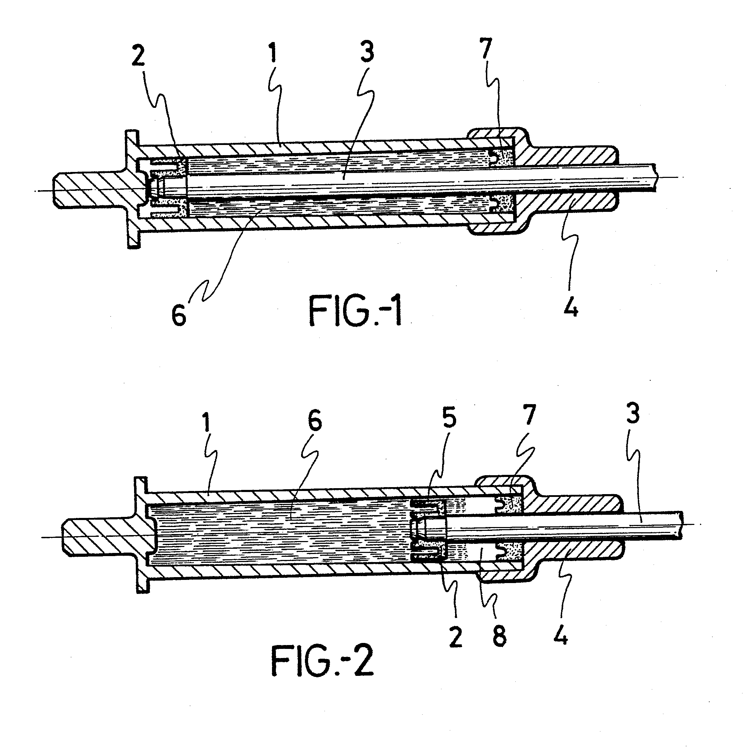

According to this static situation for the two-lip gasket 7 and from the situation shown in Figure 1, corresponding to loading the fluid 6 in the shock absorber, a situation in which the shank 3 causes maximum volumetric occupation inside the cylinder, the gradual removal of the shank 3 to the situation shown in Figure 2 causes a likewise gradual increase in the real volumetry of the cylinder, whereby a gradual vacuum is created which has been shown purely diagramatically in Figure 2 with reference number 8 and may not be located as illustrated.

Said vacuum tends at all times to make the plunger 2 recover the stable limit position of Figure 1 with said tendency increasing the further the shank 3 emerges.

As already mentioned, this vacuum acts in a similar manner to a conventional return spring, leading not only to the assembly recovering its position, but also making this tendency greater with the gradual displacement of the shank towards the opposite limit situation to the stable position.

Thus, the effect of a conventional return spring is achieved, but without the said spring, by simply fixing a two-lip gasket 7, which can be simply arranged through the existence in said gasket of a flange clamped between the inlet of the cylinder 1 and the actual lid 4, with the aid of a circlip or any other suitable method.

The materials, shape, size and layout of the elements will be liable to variation, provided this does not involve altering the essential nature of the invention.

0147999

CLAIMS

1. A shock absorber for a washing machine including a cylinder (1), a plunger (2) carried by a shank (3) forming a double chamber within the cylinder (1), and the double chamber being sealed at the outlet of the shank with the aid of a two-lip gasket (7), characterised in that the gasket (7) is linked in an immovable manner to the cylinder inlet so that, apart from sealing the shank at its outlet, it ensures that from a stable situation corresponding to when the shank is inserted to a maximum inside the cylinder, and as the shank emerges and the effective volumetric capacity of the double chamber increases, a gradual depression or vacuum is created acting as recovery means urging the shank to return to the stable situation.

2. A shock absorber according to claim 1, in which the cylinder converges slightly towards its end opposite the outlet of the shank, and a variable sized peripheral passage (5) is thus defined between the cylinder and the plunger, through which fluid (6) must flow from one chamber to the other.

3. A shock absorber according to claim 1 or claim 2, in which the cylinder inlet is closed by a lid (4) against which the gasket is located.

0147999

1/1

FIG.-1

FIG.-2